# EUROPÄISCHE PATENTANMELDUNG

(11) **EP 0 543 109 A1**
(43) Veröffentlichungstag der Anmeldung: **26.05.1993**
(21) Anmeldenummer: 92116068.5
(22) Anmeldetag: 19.09.1992
(51) Int. Cl.: G01F 1/66

(54) **Messwertgeber zur Bestimmung der Durchflussmenge einer strömenden Flüssigkeit**

(30) Priorität: 18.11.1991 CH 3358/91
(71) Anmelder: Landis & Gyr Technology Innovation AG, CH-6301 Zug (CH)
(72) Erfinder: Hauenstein, Günther, W-6457 Hochstadt (CH)
(74) Vertreter: Müller, Hans-Jürgen, Dipl.-Ing.

(57) **Zusammenfassung**

Ein Gehäuse (2) eines Meßwertgebers (1) zur Bestimmung der Durchflußmenge einer strömenden Flüssigkeit durch Messung der mittleren Strömungsgeschwindigkeit mit Hilfe von Ultraschall-Signalen umschließt einen Hohlraum, der durch eine Trennwand (3) in eine dem Zufluß der Flüssigkeit zu einer Meßstrecke dienende erste Verteilkammer (4) und eine dem Abfluß der Flüssigkeit von der Meßstrecke dienende zweite Verteilkammer (5) aufgeteilt ist. Die beiden Verteilkammern (4, 5) sind durch wenigstens ein die Trennwand (3) durchstoßendes Meßrohr (6, 6', 6'') miteinander verbunden. Gegenüber den beiden Enden des Meßrohres (6, 6', 6'') sind mit der Flüssigkeit in unmittelbarer Berührung stehende Meßwandler (7', 8', 7'', 8'') angeordnet. Der Meßwertgeber enthält Mittel, mit denen der Gesamtstrom der strömenden Flüssigkeit in wenigstens zwei Teilströme bekannten Teilungsverhältnisses aufgeteilt ist. Wenigstens einer der Teilströme strömt durch das Meßrohr (6'; 6''), wobei den Enden dieses Meßrohrs (6'; 6'') gegenüber Meßwandler (7', 8'; 7'', 8'') angeordnet sind. Solche Meßwertgeber eignen sich zur Erfassung großer Durchflußmengen.

## Beschreibung

Die Erfindung bezieht sich auf einen Meßwertgeber zur Bestimmung der Durchflußmenge einer strömenden Flüssigkeit der im Oberbegriff des Anspruchs 1 genannten Art.

Solche Meßwertgeber werden vorteilhaft in Wärmemengenmessern zur Bestimmung des Heizenergieverbrauchs verwendet.

Ein Meßwertgeber der im Oberbegriff des Anspruchs 1 genannten Art ist aus der CH-PS 648 932 bekannt. In einem Gehäuse ist ein den Flüssigkeitsstrom aufnehmendes Meßrohr vorhanden, dessen stirnseitigen Öffnungen beidseits Meßwandler für Ultraschall-Signale gegenüberliegen.

Aus der CH-PS 672 187 ist ein Durchflußvolumenzähler bekannt, der einen solchen Meßwertgeber enthält.

Meßwertgeber der bekannten Art eignen sich zur Durchflußmessung bis zu einer bestimmten Grenzdurchflußmenge (Nenndurchfluß).

Der Erfindung liegt die Aufgabe zugrunde, einen Meßwertgeber für größere Nenndurchflüsse zu schaffen, dessen Genauigkeit jenem für kleinere Nenndurchflüsse entspricht.

Es hat sich gezeigt, daß diese Aufgabe nicht dadurch gelöst werden kann, daß man die Durchmesser von Meßrohr und Wandlern gemäß dem geforderten größeren Nenndurchfluß entsprechend vergrößert.

Die genannte Aufgabe wird erfindungsgemäß durch die Merkmale der Ansprüche 1 und 4 gelöst. Vorteilhafte Ausgestaltungen ergeben sich aus den abhängigen Ansprüchen.

Nachfolgend werden zwei Ausführungsbeispiele der Erfindung anhand der Zeichnung näher erläutert.

Es zeigen:
- Fig. 1: einen Meßwertgeber mit zwei parallelen Meßstrecken und
- Fig. 2: einen Meßwertgeber mit einem Meßrohr und zwei Wandlergruppen.

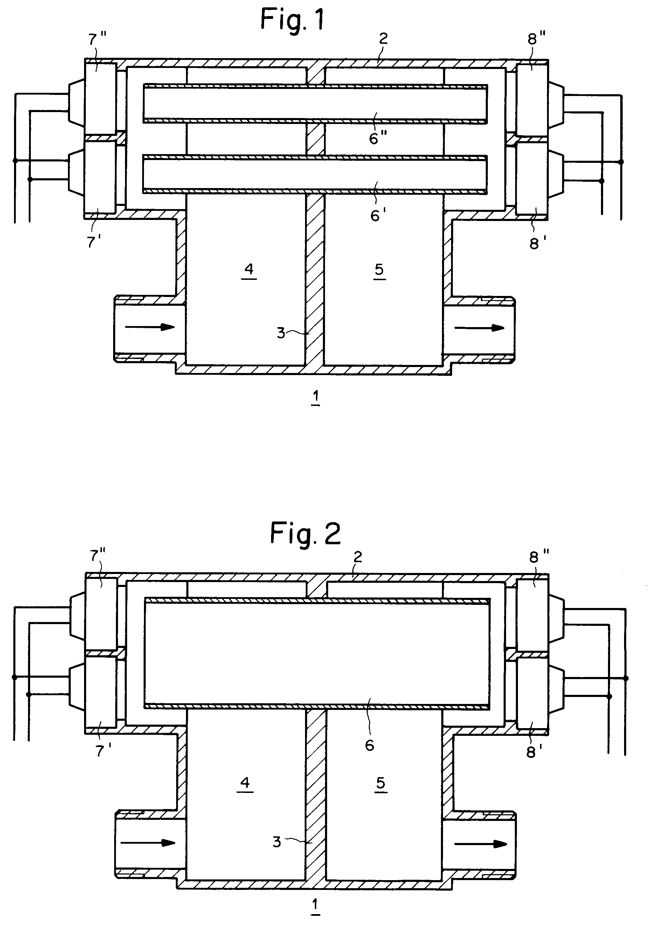

In der Figur 1 bedeutet 1 einen Meßwertgeber, dessen Gehäuse 2 eine Trennwand 3 aufweist, durch die der vom Gehäuse 2 umschlossene Hohlraum in eine dem Zustrom der Flüssigkeit zur Meßstrecke dienende erste Verteilkammer 4 und eine dem Abfluß der Flüssigkeit von der Meßstrecke dienende zweite Verteilkammer 5 geteilt ist.

Die Trennwand 3 wird von einem ersten Meßrohr 6' und einem parallel dazu liegenden zweiten Meßrohr 6'' durchstoßen. Die Enden der beiden Meßrohre 6' und 6'' liegen im Innern der beiden Verteilkammern 4 und 5.

Dem zustromseitigen Ende des Meßrohres 6' liegt ein erster Meßwandler 7' und dem abflußseitigen Ende ein zweiter Meßwandler 8' gegenüber. In gleicher Weise liegt dem zustromseitigen Ende des Meßrohres 6'' ein weiterer Meßwandler 7'' und dem abflußseitigen Ende ein weiterer Meßwandler 8'' gegenüber.

Vorteilhaft sind die Meßwandler 7' und 7'' auf der Zuströmseite der Meßrohre 6' und 6'' unter sich und die Meßwandler 8'und 8'' auf der Abströmseite der Meßrohre 6' und 6' unter sich elektrisch parallel oder in Reihe geschaltet. Dadurch wird erreicht, daß die Auswerteelektronik des Durchflußvolumenzählers, mit dem ein solcher Meßwertgeber 1 verwendet wird, prinzipiell unverändert bleiben kann. Es ist also nicht erforderlich, die Meßwandler 7 und 8 einzeln an die Auswerteelektronik anzuschließen.

Der zu messende Flüssigkeitsstrom tritt von der nicht dargestellten Rohrleitung her in die Verteilkammer 4 ein. Ein erster Teilstrom strömt durch das Meßrohr 6', ein zweiter Teilstrom durch das Meßrohr 6''. Anschließend vereinigen sich die beiden Teilströme wieder in der Verteilkammer 5, von wo aus sie in die nicht dargestellte Rohrleitung abfließen. Die Messung der Strömungsgeschwindigkeit mit Hilfe von Ultraschall-Signalen geschieht in der bekannten Weise.

Haben die beiden Meßrohre 6' und 6'' die gleichen Dimensionen und ist deren Anordnung im Inneren des Gehäuses 2 so, daß die Strömungswiderstände gleich sind, so fließt durch jedes der Meßrohre 6' bzw. 6'' genau die Hälfte des zu messenden Flüssigkeitsstroms. Unter diesen Voraussetzungen ist es möglich, nur gegenüber den Enden des einen Meßrohres 6' bzw. 6'' Meßwandler 7' und 8' bzw. 7'' und 8'' anzuordnen. Die ermittelte Strömungsgeschwindigkeit ist auch unter diesen Verhältnissen korrekt und bei der Bestimmung der Durchflußmenge muß das ermittelte Signal verdoppelt werden.

Es ist auch möglich, mehr als zwei Meßrohre 6 vorzusehen. Die Durchflußmenge ergibt sich dann als entsprechendes Vielfaches.

Die erfindungsgemäße Lehre in ihrer allgemeinsten Form besteht darin, daß Mittel vorhanden sind, mit denen der Gesamtstrom der strömenden Flüssigkeit in wenigstens zwei Teilströme bekannten Teilungsverhältnisses aufgeteilt ist, und daß wenigstens einer der Teilströme durch das Meßrohr 6' bzw. 6'' strömt, wobei den Enden dieses Meßrohrs 6' bzw. 6'' gegenüber Meßwandler 7', 8' bzw. 7'', 8'' angeordnet sind.

In der Figur 2 ist ein zweites Ausführungsbeispiel gezeigt. Gleiche Bezugszahlen wie in der Figur 1 bedeuten dabei gleiche Teile. Bei diesem Ausführungsbeispiel ist ein einziges Meßrohr 6 vorhanden. An den Enden dieses Meßrohres 6 sind zuflußseitig mehrere Meßwandler 7 angeordnet, von denen deren zwei, nämlich die Meßwandler 7' und 7'', in der Figur 2 dargestellt sind. In gleicher Weise sind abflußseitig mehrere Meßwandler 8 angeordnet, von denen deren zwei, nämlich die Meßwandler 8' und 8'', in der Figur 2 dargestellt sind. Auch hier sind die Meßwandler 7' und 7'' einerseits und die Meßwandler 8' und 8'' andererseits elektrisch parallel oder in Reihe geschaltet.

Jedes Paar von Meßwandlern, 7' und 8' einerseits und 7'' und 8'' andererseits ermittelt dabei die Strömung in einem Teilstrom, die allerdings gegeneinander nicht abgegrenzt sind. Um eine möglichst gute Erfassung der gesamten Strömung durch das Meßrohr 6 zu erhalten, sollte die Zahl der zuflußseitigen Meßwandler 7 und die Zahl der abflußseitigen Meßwandler 8 mindestens drei betragen.

Bei der Anordnung mehrerer Meßrohre 6 gemäß Figur 1 ist durch die Anordnung der Meßrohre 6 in den Verteilkammern 4 und 5 und durch die räumliche Gestaltung der Verteilkammern 4 und 5 sicherzustellen, daß für alle Meßrohre 6 gleiche Strömungsverhältnisse herrschen. Ist dies mit genügender Genauigkeit erreichbar, so ist es möglich, Meßwandler 7 und 8 nur an einem der Meßrohre 6 anzuordnen. Ist dies jedoch nicht erreichbar, beispielsweise weil die Forderung nach kurzer Baulänge eines solchen Meßwertgebers 1 besteht, so ist an jedem der Meßrohre 6 ein Paar von Meßwandlern 7 und 8 vorzusehen, wobei alle Meßwandler 7 und alle Meßwandler 8 unter sich elektrisch parallel oder in Reihe geschaltet sind. In diesem Fall sind eine korrekte Ermittlung der Strömungsgeschwindigkeit und der Durchflußmenge auch dann möglich, wenn die Strömungswiderstände an den einzelnen Meßrohren 6 nicht identisch sind.

Bei einem Meßwertgeber 1 gemäß dem Ausführungsbeispiel nach Figur 2 ist es wünschenswert, wenn ein möglichst großer Teil der Strömung durch den Querschnitt des Meßrohres 6 im Wirkungsbereich der einzelnen Meßwandler 7 und 8 liegt. Das wird erreicht, wenn mindestens drei Meßwandler 7 und drei Meßwandler 8 sich berührend so dicht aneinander angeordnet sind, daß die Mittelpunkte der Flächen dieser Meßwandler 7 bzw. 8 ein gleichseitiges Dreieck bilden.

Eine besonders vorteilhafte Anordnung mehrerer Meßwandler 7 bzw. 8 ist, wenn sieben Meßwandler 7 bzw. 8 sich berührend so dicht aneinander angeordnet sind, daß ein Meßwandler 7 bzw. 8 im Zentrum plaziert ist und sechs Meßwandler 7 bzw. 8 darum herum angeordnet sind, wobei die Mittelpunkte dieser sechs Meßwandler 7 bzw. 8 ein gleichseitiges Sechseck bilden. Mit einer solchen Anordnung lassen sich Durchflußmesser für sehr große Durchflußmengen realisieren.

Vorteilhaft ist es auch, mehrere Meßwandler 7 bzw. 8 zu einer Baueinheit zusammenzufassen. Ein Meßwandler 7 bzw. 8 besteht dann aus mehreren Wandlerelektroden in einer der zuvor genannten Anordnungen, wobei die einzelnen Wandlerelektroden elektrisch parallel oder in Reihe geschaltet sind.

## Patentansprüche

1. Meßwertgeber (1) zur Bestimmung der Durchflußmenge einer strömenden Flüssigkeit durch Messung der mittleren Strömungsgeschwindigkeit mit Hilfe von Ultraschall-Signalen, dessen Gehäuse (2) einen Hohlraum umschließt, der durch eine Trennwand (3) in eine dem Zufluß der Flüssigkeit zu einer Meßstrecke dienende erste Verteilkammer (4) und eine dem Abfluß der Flüssigkeit von der Meßstrecke dienende zweite Verteilkammer (5) aufgeteilt ist, wobei die beiden Verteilkammern (4, 5) durch ein die Trennwand (3) durchstoßendes Meßrohr (6, 6', 6'') miteinder verbunden sind und gegenüber den beiden Enden des Meßrohres (6, 6', 6'') mit der Flüssigkeit in unmittelbarer Berührung stehende Meßwandler (7', 8', 7'', 8'') angeordnet sind,
dadurch gekennzeichnet, daß Mittel vorhanden sind, mit denen der Gesamtstrom der strömenden Flüssigkeit in wenigstens zwei Teilströme bekannten Teilungsverhältnisses aufgeteilt ist, und daß wenigstens einer der Teilströme durch das Meßrohr (6'; 6'') strömt, wobei den Enden dieses Meßrohrs (6'; 6'') gegenüber Meßwandler (7', 8'; 7'', 8'') angeordnet sind.

2. Meßwertgeber nach Anspruch 1, dadurch gekennzeichnet, daß wenigstens zwei Meßrohre (6', 6'') einander parallel angeordnet sind.

3. Meßwertgeber nach Anspruch 2, dadurch gekennzeichnet, daß jedem einen Teilstrom führenden Meßrohr (6', 6'') Meßwandler (7', 8'; 7'', 8'') zugeordnet sind, und daß die Meßwandler (7', 7'') auf der Zuströmseite der Meßrohre (6', 6'') unter sich und die Meßwandler (8', 8'') auf der Abströmseite der Meßrohre (6', 6') unter sich elektrisch parallel oder in Reihe geschaltet sind.

4. Meßwertgeber zur Bestimmung der Durchflußmenge einer strömenden Flüssigkeit durch Messung der mittleren Strömungsgeschwindigkeit mit Hilfe von Ultraschall-Signalen, dessen Gehäuse (2) einen Hohlraum umschließt, der durch eine Trennwand (3) in eine dem Zufluß der Flüssigkeit zu einer Meßstrecke dienende erste Verteilkammer (4) und eine dem Abfluß der Flüssigkeit von der Meßstrecke dienende zweite Verteilkammer (5) aufgeteilt ist, wobei die beiden Verteilkammern (4, 5) durch ein die Trennwand (3) durchstoßendes Meßrohr (6, 6', 6'') miteinder verbunden sind und gegenüber den beiden Enden des Meßrohres (6, 6', 6'') mit der Flüssigkeit in unmittelbarer Berührung stehende Meßwandler (7', 8', 7'', 8'') angeordnet sind,
dadurch gekennzeichnet, daß ein einziges für den Nenndurchfluß bemessenes Meßrohr (6) vorhanden ist, daß den Enden dieses Meßrohres (6) gegenüber liegend mehrere Meßwandler (7', 8', 7''. 8'') angeordnet sind und daß die Meßwandler (7', 7'') auf der Zuströmseite des Meßrohres (6) unter sich und die Meßwandler (8', 8'') auf der Abströmseite des Meßrohres (6) unter sich elektrisch parallel oder in Reihe geschaltet sind.

5. Meßwertgeber nach Anspruch 4, dadurch gekennzeichnet, daß die Meßwandler (7', 7'') auf der Zuströmseite und die Meßwandler (8', 8'') auf der Abströmseite jeweils zu einer Baueinheit mit mehreren Wandlerelektroden zusammengefaßt sind.
